# EUROPEAN PATENT APPLICATION

(11) **EP 2 538 310 A1**
(43) Date of publication of application: **26.12.2012**
(21) Application number: 10846080.9
(22) Date of filing: 10.12.2010
(51) Int. Cl.: G06F 3/041, G06F 3/042

(54) **MOBILE TERMINAL AND CONTROL METHOD THEREOF**

(30) Priority: 19.02.2010 JP 2010035251
(71) Applicant: NEC Corporation, Tokyo 108-8001 (JP)
(72) Inventor: HASUI, Ryoji, Tokyo 108-8001 (JP)
(74) Representative: Vossius & Partner
(86) International application number: PCT/JP2010/007198
(87) International publication number: WO 2011/101940

(57) **Abstract**

An object of the invention is to provide a mobile terminal capable of preventing an unintended erroneous input to a touch panel, and a control method thereof. A mobile terminal (1) according to the invention includes a touch panel (30), a contact area detection unit (302), and an input determination unit (102). The contact area detection unit (302) detects a contact area of an object on the touch panel (30) when the object touches the touch panel (30). The input determination unit (102) determines whether the input through a touch of the object on the touch panel (30) is valid or not. The input determination unit (102) determines that the input through the touch of the object is invalid when the contact area detected by the contact area detection unit (302) is equal to or larger than a value corresponding to an upper limit of a contact area of a fingertip touching the touch panel (3) during a finger input.

## Description

### Technical Field

The present invention relates to a mobile terminal and a control method thereof, and more particularly, to a mobile terminal including a touch panel, and a control method thereof.

### Background Art

In recent years, a touch panel that senses a touch of a fingertip or a pen to perform an input operation is used as a UI (User Interface) of a mobile terminal. As systems for sensing a touch, a resistive system, an ultrasonic wave system, a capacitive system, and the like are proposed.

Patent Literature 1 discloses a technique in which a contact area of a pen on a touch panel is detected and switching between an input mode and a delete mode is made according to the detected contact area. Specifically, the input mode is enabled when the touch panel is touched by a narrow pen tip, and the delete mode is enabled when the touch panel is touched by a large pen tip.

Patent Literature 2 discloses a technique in which when a contact area on a touch panel is smaller than a predetermined value, it is determined that an input has been made by a pen, and when the contact area is equal to or larger than the predetermined value, it is determined that an input has been made by a finger.

Meanwhile, Patent Literature 3 discloses a technique in which dot spacers are arranged at different pitches on a resistive touch panel. Specifically, on the touch panel, in a region where the dot spacers are arranged at a relatively long pitch, an input can be made by both a finger and a pen, and in a region where the dot spacers are arranged at a pitch smaller than the pitch, an input can be made only by a pen. Further, in a region where the arrangement pitch of the dot spacers is even smaller, both an input by a finger and an input by a pen are inhibited.

On the other hand, Patent Literature 4 discloses a technique in which processing operations are correlated with a fingerprint pattern of a finger of a user or with a contact area pattern; the fingerprint pattern or the contact area pattern of the finger touching a touch panel is detected; and the processing operation allocated to the fingerprint pattern or the contact area pattern is executed.

### Citation List

### Patent Literature

[Patent Literature 1] Japanese Unexamined Patent Application Publication No. 07-200133
[Patent Literature 2] Japanese Unexamined Patent Application Publication No. 2008-108233
[Patent Literature 3] Japanese Unexamined Patent Application Publication No. 2007-219737
[Patent Literature 4] Japanese Unexamined Patent Application Publication No. 11-327727

### Summary of Invention

### Technical Problem

In the techniques disclosed in Patent Literatures 1 and 2, however, when a mobile terminal including a touch panel is gripped by a user, an unintended portion (for example, a finger pad, a palm, or the like of the user) touches the touch panel, which may lead to occurrence of the delete mode or an erroneous input as a finger input.

Further, in the technique disclosed in Patent Literature 3, an unintended input by a finger or a pen can be inhibited by adjusting the arrangement pitch of the dot spacers. To achieve this, it is necessary to preliminarily determine the regions where the input is inhibited. However, it is difficult to predict the positions where an unintended input may be made and to determine the regions where the input is inhibited.

Furthermore, in the technique disclosed in Patent Literature 4, the touch panel does not react to a touch of a non-registered fingerprint pattern or contact area pattern. For this reason, it is necessary to register all the fingerprint patterns or contact area patterns of fingers which may be used. This requires a troublesome operation for the user.

The present invention has been made to solve the above-mentioned problems and has an object to provide a mobile terminal capable of preventing an unintended erroneous input to a touch panel, and a control method thereof.

### Solution to Problem

A mobile terminal according to an exemplary aspect of the present invention includes: a touch panel that receives an input through a touch of an object; contact area detection means for detecting a contact area of the object on the touch panel, when the object touches the touch panel; and input determination means for determining whether the input through the touch of the object on the touch panel is valid or not. The input determination means determines that the input through the touch of the object is invalid when the contact area detected by the contact area detection means is equal to or larger than a value corresponding to an upper limit of a contact area of a fingertip touching the touch panel.

A mobile terminal control method according to another exemplary aspect of the present invention includes: detecting a contact area of an object on a touch panel that receives an input through a touch of the object, when the object touches the touch panel; and determining whether the input through the touch of the object on the touch panel is valid or not. The determination as to whether the input is valid or not includes determining whether the input through the touch of the object is valid or not when the contact area detected is equal to or larger than a value corresponding to an upper limit of a contact area of a fingertip touching the touch panel during a finger input.

### Advantageous Effects of Invention

According to the present invention, it is possible to provide a mobile terminal capable of preventing an unintended erroneous input to a touch panel, and a control method thereof.

### Brief Description of Drawings

Fig. 1 is a diagram showing a configuration example of a mobile terminal according to a first exemplary embodiment;
Fig. 2 is a diagram showing an example of use of the mobile terminal according to the first exemplary embodiment;
Fig. 3 is a flowchart showing an operation of the mobile terminal according to the first exemplary embodiment;
Fig. 4 is a diagram for explaining information notified to a control unit according to the first exemplary embodiment;
Fig. 5 is a diagram showing a configuration example of a mobile terminal according to a second exemplary embodiment;
Fig. 6 is a flowchart showing an operation of the mobile terminal according to the second exemplary embodiment;
Fig. 7 is a diagram showing a configuration example of a mobile terminal according to a third exemplary embodiment; and
Fig. 8 is a flowchart showing an operation of the mobile terminal according to the third exemplary embodiment.

### Description of Embodiments

### First Exemplary Embodiment

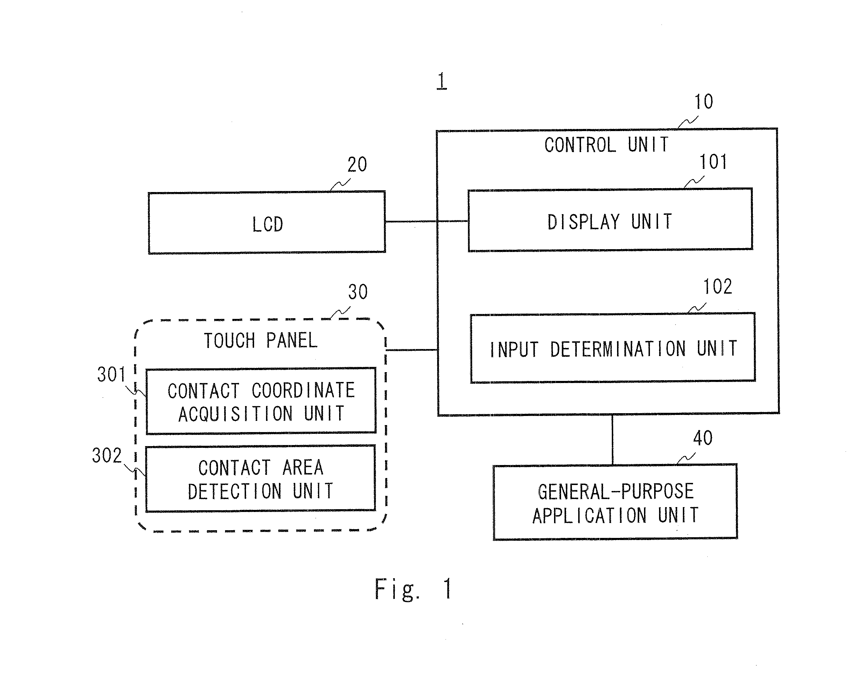

Hereinafter, exemplary embodiments of the present invention will be described with reference to the drawings. Fig. 1 shows a configuration example of a mobile terminal 1 according to this exemplary embodiment. The mobile terminal 1 includes a control unit 10, an LCD (Liquid Crystal Display) 20, a touch panel 30, and a general-purpose application unit 40.

The control unit 10 includes a display unit 101 and an input determination unit 102. The display unit 101 displays screen information sent from the general-purpose application unit 40 on the LCD 20. In this case, when an object touches the touch panel 30, the general-purpose application unit 40 acquires coordinate information on the touch panel 30 which is notified from the control unit 10. Then, the general-purpose application unit 40 executes event processing based on the acquired coordinate information, and sends the execution result of the event processing to the display unit 101 to thereby update screen information. Examples of the contents of the application include a browser and a mailer which are recent well-known typical applications.

When an object touches the touch panel 30, the input determination unit 102 determines whether an input through a touch on the touch panel 30 is valid or not. Specifically, when the area of the object touching the touch panel 30 is equal to or larger than a value (hereinafter referred to as a first threshold) corresponding to an upper limit of a contact area of a fingertip touching the touch panel 30 during a finger input operation, it is determined that the input through a touch with the object is invalid. Note that the first threshold can be arbitrarily set by a user, and desirably indicates an area larger than a fingertip and smaller than a finger pad.

The touch panel 30 includes a contact coordinate acquisition unit 301 and a contact area detection unit 302. The contact coordinate acquisition unit 301 acquires the coordinate of the object touching the touch panel 30. Specifically, when the user touches the touch panel 30 with a pen, a finger, or the like, the contact coordinate acquisition unit 301 acquires coordinate information of the contact point, and sends the coordinate information to the control unit 10. When the object touches the touch panel 30, the contact area detection unit 302 detects the contact area of the object on the touch panel 30.

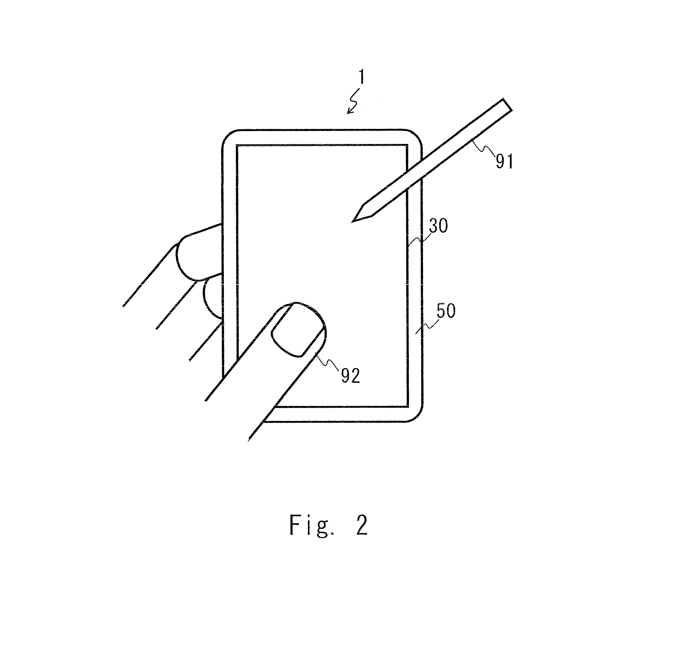

An example of use of the mobile terminal 1 will now be described with reference to Fig. 2. As shown in Fig. 2, the user of the mobile terminal 1 grips the mobile terminal 1 with one hand, and performs an input operation while touching the touch panel 30 with a pen 91 in the other hand (or a fingertip of the other hand). At this time, when the user grips the mobile terminal 1 with one hand, the touch panel 30 has a size that allows a part of the fingers of the hand gripping the mobile terminal to touch the touch panel 30. More specifically, in the case where the mobile terminal 1 in which the region of the touch panel 30 occupies 80 to 90% of the area of a surface 50, on which the touch panel 30 of the mobile terminal is provided, is gripped, fingers are more likely to touch the touch panel 30. Therefore, the effect of applying the present invention is significant. Fig. 2 shows a use state where a thumb 92 of the hand gripping the mobile terminal 1 touches the touch panel 30.

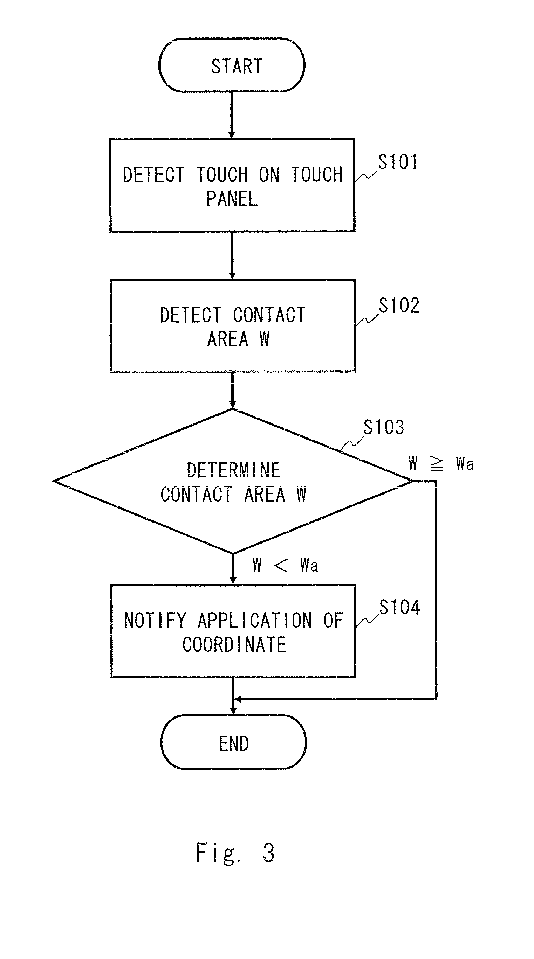

Subsequently, an operation example of the mobile terminal 1 according to this exemplary embodiment will be described with reference to the flowchart shown in Fig. 3. First, the touch panel 30 detects a touch of an object (step S101). Then, the contact area detection unit 302 detects a contact area W of the object touching the touch panel 30 and sends information on the contact area W to the control unit 10 (step S102). At this time, the contact coordinate acquisition unit 301 also sends the coordinate information of the acquired object contact position to the control unit 10. The input determination unit 102 determines whether the received contact area W is larger than a first threshold Wa (step S103).

When the contact area W is smaller than the first threshold Wa (W<Wa), the input determination unit 102 determines that the input through the touch of the object is valid. Then, the control unit 10 notifies the general-purpose application unit 40 of the coordinate information received from the contact coordinate acquisition unit 301 (step S104). The general-purpose application unit 40 executes a processing operation according to the coordinate information. After that, the general-purpose application unit 40 sends the processing result to the control unit 10, and the display unit 101 updates the display of the LCD 20 based on the processing result.

On the other hand, when the contact area W is equal to or larger than the first threshold Wa (W≥Wa), the input determination unit 102 determines that the input through the touch of the object is invalid. Accordingly, the control unit 10 does not send, to the general-purpose application unit 40, the coordinate information of the touch when the contact area W is equal to or larger than the first threshold Wa. That is, the general-purpose application unit 40 executes no processing for the touch of the object on the touch panel 30.

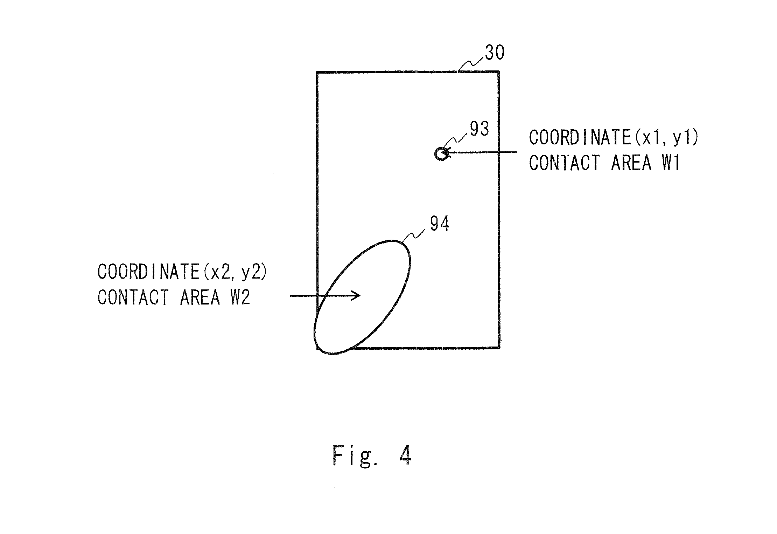

The above-mentioned operation of the touch panel 30 will be described in more detail with reference to an example of use shown in Fig. 2. Fig. 4 is a diagram showing the information notified from the touch panel 30 to the control unit 10 in the example of use shown in Fig. 2. In Fig. 4, as for a portion 93 touching the touch panel 30 with the pen 91, the contact coordinate acquisition unit 301 acquires a coordinate (x1, y1) of the portion 93 and sends the coordinate information to the control unit 10. At this time, the contact coordinate acquisition unit 301 acquires the central coordinate of the contact portion. Further, the contact area detection unit 302 detects a contact area W1 and sends the information on the contact area W1 to the control unit 10. Similarly, the touch panel 30 sends a coordinate (x2, y2) of a contact portion 94 touched by the thumb 92 and a contact area W2 to the control unit 10.

The input determination unit 102 determines whether the contact areas W1 and W2 sent from the contact area detection unit 302 are equal to or larger than the first threshold Wa. Assume in this embodiment that W1<Wa<W2 holds. Since the contact area W1 is smaller than the first threshold Wa, the input determination unit 102 determines that the input with the object on the contact area W1, specifically, the input with the pen 91, is valid. Then, the control unit 10 sends the coordinate (x1, y1) of the input with the pen 91 to the general-purpose application unit 40.

On the other hand, since the contact area W2 is larger than the first threshold Wa, the input determination unit 102 determines that the input with the object on the contact area W2, specifically, the input with the thumb 92, is invalid. Accordingly, the control unit 10 does not send the coordinate (x2, y2) of the input with the thumb 92 to the general-purpose application unit 40. Note that when a plurality of objects touches the touch panel 30 simultaneously (for example, a pen and a finger contact the touch panel simultaneously), the input determination unit 102 carries out the determination operation on each of the objects.

Thus, in the configuration of the mobile terminal 1 according to this exemplary embodiment, the contact area detection unit 302 detects a contact area of an object on the touch panel 30, and the input determination unit 102 determines whether the input through a touch of the object is valid or not based on the contact area and the first threshold. Accordingly, even if a part of fingers gripping the mobile terminal 1 touches the touch panel 30, for example, when the contact area is equal to or larger than the first threshold, the touch is determined as invalid. On the other hand, when the contact area of a pen, a fingertip, or the like is smaller than the first threshold, the contact is determined as valid. As a result, an erroneous input caused by an unintended touch on the touch panel 30 can be prevented.

### Second Exemplary Embodiment

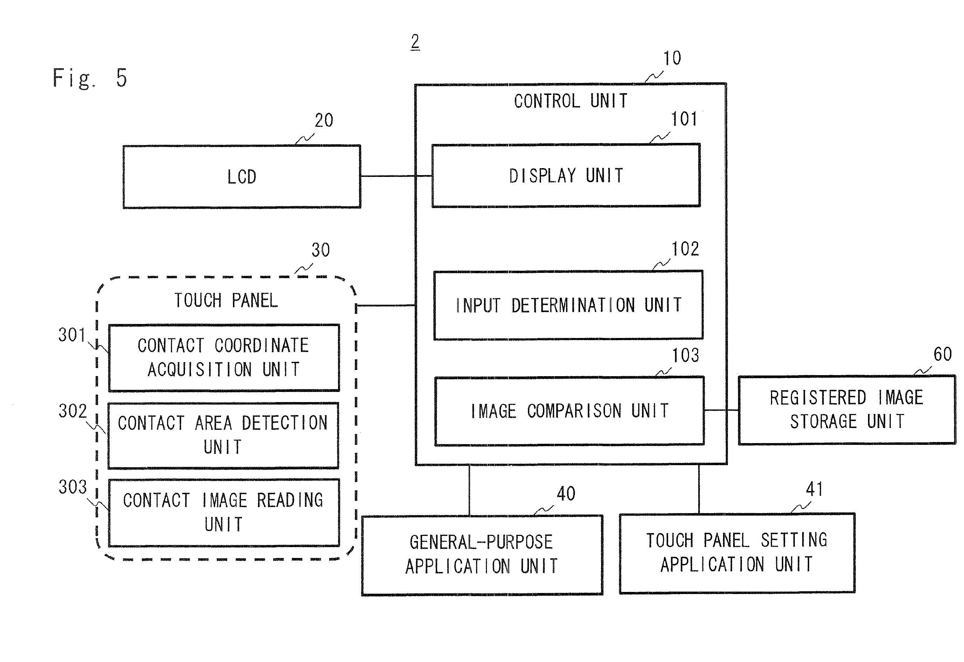

A second exemplary embodiment of the present invention will be described. Fig. 5 shows a configuration example of a mobile terminal 2 according to this exemplary embodiment. The mobile terminal 2 shown in Fig. 5 includes an image comparison unit 103, a contact image reading unit 303, a touch panel setting application unit 41, and a registered image storage unit 60, in addition to the components of the mobile terminal 1 shown in Fig. 1. Note that the other components are similar to those of the mobile terminal 1, so the description thereof is omitted.

The image comparison unit 103 compares image data on an object contacting the touch panel 30 with registered image data, thereby performing authentication. The input determination unit 102 determines whether the input through the touch of the object is valid or not based on the contact area W detected by the contact area detection unit 302 and the comparison result of the image comparison unit 103. In this case, the term "registered image data" refers to preliminarily registered image data of a fingerprint of a user. The registered image data is stored in the registered image storage unit 60 which is a memory such as a RAM (Random Access Memory).

The contact image reading unit 303 scans an image of an object touching the touch panel 30, and reads the image data of the object. The image data is sent to the image comparison unit 103. In this exemplary embodiment, fingerprint image data is used as image data. The image comparison unit 103 compares the image data by using fingerprint authentication, vein authentication, or the like.

The touch panel setting application unit 41 is an application that causes a user setting screen involving the comparison processing of the image comparison unit 103 to be displayed. Examples of the user setting screen involving the comparison processing include a screen for registering the registered image data, and a screen for switching the validity and invalidity of the image comparison processing.

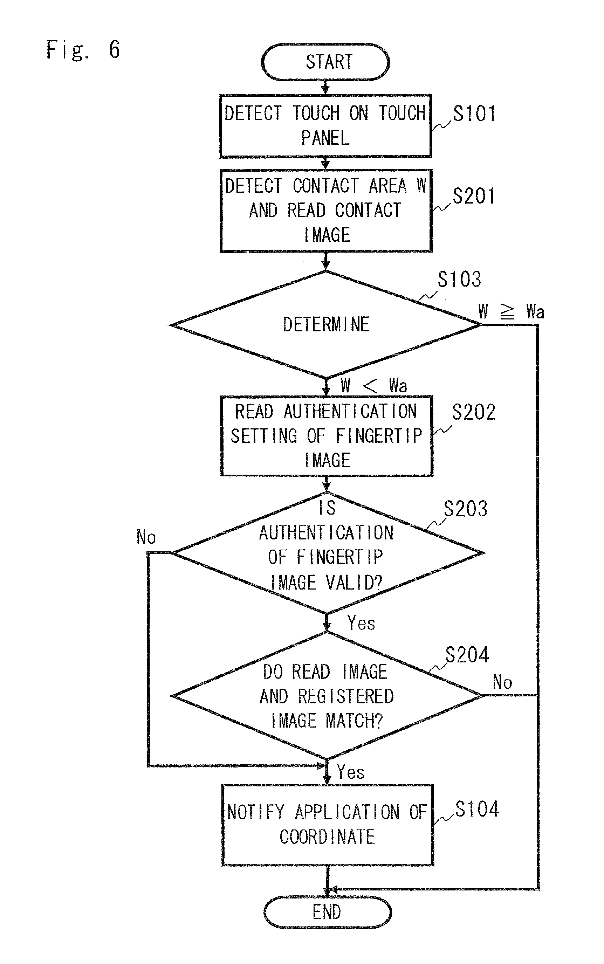

Subsequently, an operation example of the mobile terminal 2 according to this exemplary embodiment will be described with reference to the flowchart shown in Fig. 6. First, as with the first exemplary embodiment, the touch panel 30 detects a touch of an object (step S101). Next, the contact area detection unit 302 detects the contact area W and sends the contact area W to the control unit 10. Further, the contact image reading unit 303 reads the fingertip image data of the finger touching the touch panel, and sends the read image data to the control unit 10 (step S201). Then, the input determination unit 102 determines whether the contact area W is equal to or larger than the first threshold Wa (step S103). In this case, when the contact area W is larger than the first threshold Wa (W≥Wa), the input determination unit 102 determines that the input through the touch of the object is invalid.

On the other hand, when the contact area W is smaller than the first threshold Wa (W<Wa), the control unit 10 executes reading of the fingerprint authentication setting made by the touch panel setting application unit 41 (step S202). Specifically, the image comparison unit 103 reads the registered fingerprint image data from the registered image storage unit 60. Further, the control unit 10 reads the setting as to the validity/invalidity of the fingerprint authentication. Then, the control unit 10 determines whether the fingerprint authentication is valid or not (step S203). When the fingerprint authentication is invalid, the control unit 10 notifies the general-purpose application unit 40 of the coordinate information of the fingertip touching the touch panel 30 (step S104).

When the fingerprint authentication is valid, the image comparison unit 103 compares the fingertip image data read by the contact image reading unit 303 with the registered fingertip image data read from the registered image storage unit 60 (step S204). When the read fingertip image data matches the registered fingertip image data, the input determination unit 102 determines that the input through the touch of the fingertip is valid, and the control unit 10 notifies the general-purpose application unit 40 of the coordinate information of the fingertip (step S104). When the read fingertip image data and the registered fingertip image data do not match, the input determination unit 102 determines that the input with the fingertip is invalid, and the control unit 10 does not notify the coordinate information of the fingertip. Note that the validity and invalidity of the authentication processing can be arbitrarily switched by the user by changing the setting of the touch panel setting application unit 41.

Thus, in the mobile terminal 2 according to this exemplary embodiment, the contact image reading unit 303 reads the image data of a fingerprint or the like touching the touch panel 30, and the input determination unit 102 determines whether the input through the touch of the fingertip or the like is valid or not based on the contact area W as well as the read image. Accordingly, touches other than the touches of the preliminarily registered fingertips of the user are determined as invalid. This results in an improvement in accuracy of determination of an erroneous input. Furthermore, since the touch panel does not react to touches other than the touches of the fingers of the user, which enhances the security.

### Third Exemplary Embodiment

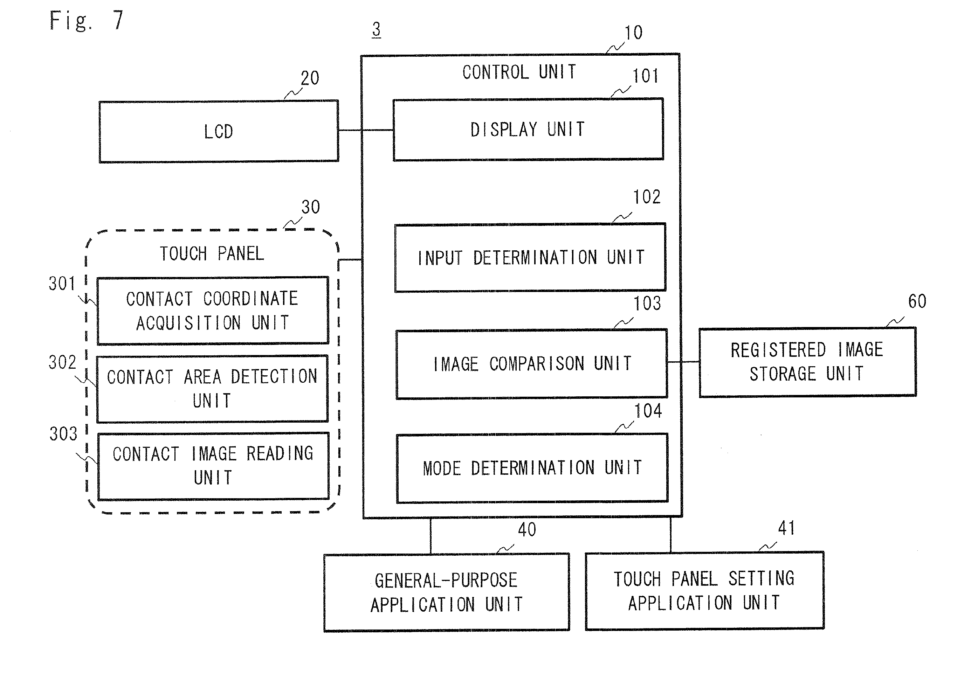

A third exemplary embodiment of the present invention will be described. Fig. 7 shows a configuration example of a mobile terminal 3 according to this exemplary embodiment. The mobile terminal 3 shown in Fig. 7 includes a mode determination unit 104, in addition to the components of the mobile terminal 2 shown in Fig. 5. Note that the other components are similar to those of the mobile terminal 2, so the description thereof is omitted.

When the contact area W detected by the contact area detection unit 302 is smaller than a value (hereinafter referred to as a second threshold) Wb corresponding to an upper limit of a contact area of a pen tip touching the touch panel 30 during a pen input, the mode determination unit 104 determines that the input mode is a pen input mode. When the contact area W is equal to or larger than the second threshold Wb and smaller than the first threshold Wa, it is determined that the input mode is the finger input mode. In this case, the term "second threshold" refers to a threshold for determining whether the object touching the touch panel 30 is a pen or a finger. The second threshold can be arbitrarily set by a user, and is preferably a value which is larger than the contact area of a pen tip and smaller than the contact area of a fingertip. Note that as with the input determination unit 102, the mode determination unit 104 also performs the determination operation on each object when a plurality of objects simultaneously touches the touch panel 30.

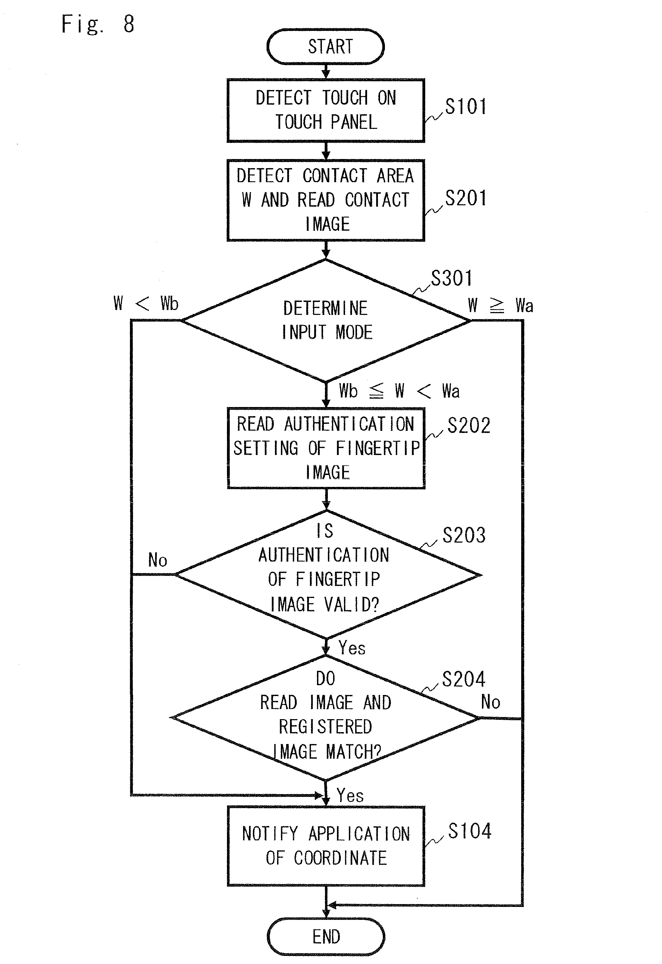

Subsequently, an operation example of the mobile terminal 3 according to this exemplary embodiment will be described with reference to the flowchart of Fig. 8. First, as with the second exemplary embodiment, when the touch panel 30 detects a touch of an object (step S101), the contact area detection unit 302 detects the contact area W and the contact image reading unit 303 reads the contact image of the object (step S201).

Next, the input determination unit 102 and the mode determination unit 104 determine the input mode of the object touching the touch panel 30 (step S301). Specifically, the input determination unit 102 determines whether the contact area W is equal to or larger than the first threshold Wa, as with the second exemplary embodiment described above. In this case, when the contact area W is larger than the first threshold Wa (W≥Wa), the input determination unit 102 determines that the input through the touch of the object is invalid.

On the other hand, when the contact area W is smaller than the first threshold Wa (W<Wa), the mode determination unit 104 determines that the input mode is the pen input mode or the finger input mode. When the contact area W of the object touching the touch panel is smaller than the second threshold Wb (W<Wb), the mode determination unit 104 determines that the object touching the touch panel 30 is a pen tip and that the input mode is the pen input mode. In this case, since it is determined that the input mode is the pen input mode, the control unit 10 notifies the general-purpose application unit 40 of the coordinate information of the contact portion of the pen tip (S104).

When the contact area W of the object touching the touch panel is equal to or larger than the second threshold Wb and smaller than the first threshold Wa (Wb≤W<Wa), the mode determination unit 104 determines that the object touching the touch panel 30 is a fingertip. When it is determined that the object touching the touch panel is a fingertip, processing similar to that of the second exemplary embodiment is carried out.

Specifically, the control unit 10 reads the authentication setting of the fingertip image (step S202). Then, the control unit 10 determines whether or not the authentication is valid or not (step S203). When the authentication is invalid, the control unit 10 notifies the general-purpose application unit 40 of the coordinate information of the fingertip. When the authentication is valid, the image comparison unit 103 compares the read image with the registered image (step S204). When the read image and the registered image match, the control unit 10 determines that the input is made during the finger input mode, and notifies the general-purpose application unit 40 of the coordinate information of the contact portion of the fingertip (step S104). When the read image and the registered image do not match, the input determination unit 102 determines that the input is invalid.

Thus, in the mobile terminal 3 according to this exemplary embodiment, the mode determination unit 104 determines the input mode depending on the object touching the touch panel. Accordingly, the processing operation of the general-purpose application unit 40 can be changed depending on whether the input mode is the pen input mode or the finger input mode. As a result, the processing operation for the touch on the touch panel 30 can be easily changed.

Note that the present invention is not limited to the above exemplary embodiments, and the exemplary embodiments can be arbitrarily changed or combined without departing from the scope of the invention. For example, the image data is not limited to a fingertip image, but may be an image of a stylus. Further, the registered image data is not limited to fingertip image data of a user, but may be a versatile fingertip image based on which a determination can be made as to whether the object is a fingertip or not. Thus, an input of a fingertip other than the fingertip of the user is also determined as a valid input, which improves the convenience. Furthermore, the control unit 10 may be configured to detect the contact area W based on the coordinate information sent from the touch panel 30.

A part or the whole of the above exemplary embodiments may also be expressed as the following supplementary notes, but the present invention is not limited to the supplementary notes described below.

### (Supplementary note 1)

A mobile terminal comprising:
a touch panel that receives an input through a touch of an object;
contact area detection means for detecting a contact area of the object on the touch panel when the object touches the touch panel; and
input determination means for determining whether the input through the touch of the object on the touch panel is valid or not,
wherein the input determination means determines that the input through the touch of the object is invalid when the contact area detected by the contact area detection means is equal to or larger than a value corresponding to an upper limit of a contact area of a fingertip touching the touch panel during a finger input.

### (Supplementary note 2)

The mobile terminal according to Supplementary node 1, wherein when the mobile terminal is gripped by a user with one hand, the touch panel has a size that allows a part of fingers gripping the mobile terminal to touch the touch panel.

### (Supplementary note 3)

The mobile terminal according to Supplementary note 1 or 2, further comprising contact image reading means that reads image data of the object touching the touch panel,
wherein when the contact area detected by the contact area detection means is smaller than the value corresponding to the upper limit of the contact area of the fingertip, the input determination means determines whether the input through the touch of the object is valid or not based on the image data read by the contact image reading means.

### (Supplementary note 4)

The mobile terminal according to Supplementary note 3, further comprising:
registered image storage means for storing preliminarily registered image data; and
image comparison means for comparing the preliminarily registered image data with the image data read by the contact image reading means,
wherein when the contact area detected by the contact area detection means is smaller than the value corresponding to the upper limit of the contact area of the fingertip, the input determination means determines whether the input through the touch of the object is valid or not based on a result of the comparison by the image comparison means.

### (Supplementary note 5)

The mobile terminal according to Supplementary note 3 or 4, wherein when the contact area detected by the contact area detection means is equal to or larger than a value corresponding to an upper limit of a contact area of a pen tip touching the touch panel during a pen input and smaller than the value corresponding to the upper limit of the contact area of the fingertip, the input determination means determines whether the input through the touch of the object is valid or not based on the image data read by the contact image reading means.

### (Supplementary note 6)

The mobile terminal according to any one of Supplementary notes 3 to 5, wherein the image data is image data of a fingertip of a user, and the contact image reading means reads the image data of the fingertip touching the touch panel.

### (Supplementary note 7)

The mobile terminal according to Supplementary note 5 or 6, further comprising mode determination means for determining a pen input mode when the contact area detected by the contact area detection means is smaller than the value corresponding to the upper limit of the contact area of the pen tip, and for determining a finger input mode when the contact area is equal to or larger than the value corresponding to the upper limit of the contact area of the pen tip and smaller than the value corresponding to the upper limit of the contact area of the fingertip.

### (Supplementary note 8)

The mobile terminal according to any one of Supplementary notes 1 to 7, wherein when a plurality of the objects touches the touch panel, the input determination means determines whether the input through the touch of each of the objects on the touch panel is valid or not.

### (Supplementary note 9)

A mobile terminal control method comprising:
detecting a contact area of an object on a touch panel that receives an input through a touch of the object, when the object touches the touch panel; and
determining whether the input through the touch of the object on the touch panel is valid or not,
wherein the determination as to whether the input is valid or not comprises determining that the input through the touch of the object is invalid when the contact area detected is equal to or larger than a value corresponding to an upper limit of a contact area of a fingertip touching the touch panel during a finger input.

### (Supplementary note 10)

The mobile terminal control method according to Supplementary note 9, wherein when a user grips the mobile terminal with one hand, the touch panel has a size that allows a part of fingers of the hand gripping the mobile terminal to touch the touch panel.

### (Supplementary note 11)

The mobile terminal control method according to Supplementary note 9 or 10, further comprising reading image data of the object touching the touch panel,
the determination as to whether the input is valid or not comprises determining whether the input through the touch of the object is valid or not based on the read image data when the contact area detected is smaller than the value corresponding to the upper limit of the contact area of the fingertip.

### (Supplementary note 12)

The mobile terminal control method according to Supplementary note 11, further comprising:
comparing preliminarily registered image data with the read image data; and
determining whether the input through the touch of the object is valid or not based on a result of the comparison.

### (Supplementary note 13)

The mobile terminal control method according to Supplementary note 11 or 12, wherein the determination as to whether the input is valid or not comprises determining whether the input through the touch of the object is valid or not based on the read image data when the contact area detected is equal to or larger than a value corresponding to an upper limit of a contact area of a pen tip touching the touch panel during a pen input and smaller than the value corresponding to the upper limit of the contact area of the fingertip.

### (Supplementary note 14)

The mobile terminal control method according to any one of Supplementary notes 11 to 13, wherein the image data is image data of a fingertip of a user, and the image data of the fingertip touching the touch panel is read.

### (Supplementary note 15)

The mobile terminal control method according to Supplementary note 13 or 14, further comprising:
determining a pen input mode when the detected contact area of the object is smaller than the value corresponding to the upper limit of the contact area of the pen tip; and
determining a finger input mode when the contact area is equal to or larger than the value corresponding to the upper limit of the contact area of the pen tip and smaller than the value corresponding to the upper limit of the contact area of the fingertip.

### (Supplementary note 16).

The mobile terminal control method according to any one of Supplementary notes 9 to 15, wherein when a plurality of the objects touches the touch panel, the determination as to whether the input is valid or not comprises determining whether the input through the touch of each of the object on the touch panel is valid or not.

### (Supplementary note 17)

An input device comprising:
a touch panel that receives an input through a touch of an object;
contact area detection means for detecting a contact area of the object on the touch panel when the object touches the touch panel; and
input determination means for determining whether the input through the touch of the object on the touch panel is valid or not,
wherein the input determination means determines that the input through the touch of the object is invalid when the contact area detected by the contact area detection means is equal to or larger than a value corresponding to an upper limit of a contact area of a fingertip touching the touch panel during a finger input.

### (Supplementary note 18)

The input device according to Supplementary note 17, wherein when the input device is gripped by a user with one hand, the touch panel has a size that allows a part of fingers of the hand gripping the input device to touch the touch panel.

### (Supplementary note 19)

The input device according to Supplementary note 17 or 18, further comprising contact image reading means for reading image data of the object touching the touch panel,
wherein when the contact area detected by the contact area detection means is smaller than the value corresponding to the upper limit of the contact area of the fingertip, the input determination means determines whether the input through the touch of the object is valid or not based on the image data read by the contact image reading means.

### (Supplementary note 20)

The input device according to Supplementary note 19, further comprising:
registered image storage means for storing preliminarily registered image data, and
image comparison means for comparing the preliminarily registered image data with the image data read by the contact image reading means,
wherein when the contact area detected by the contact area detection means is smaller than the value corresponding to the upper limit of the contact area of the fingertip, the input determination means determines whether the input through the touch of the object is valid or not based on a result of the comparison by the image comparison means.

### (Supplementary note 21)

The input device according to Supplementary note 19 or 20, wherein when the contact area detected by the contact area detection means is equal to or larger than a value corresponding to an upper limit of a contact area of a pen tip touching the touch panel during a pen input and smaller than the value corresponding to the upper limit of the contact area of the fingertip, the input determination means determines whether the input through the touch of the object is valid or not based on the image data read by the contact image reading means.

### (Supplementary note 22)

The input device according to any one of Supplementary notes 19 to 21, wherein the image data is image data of a fingertip of a user, and the contact image reading means reads the image data of the fingertip touching the touch panel.

### (Supplementary note 23)

The input device according to Supplementary note 21 or 22, further comprising mode determination means for determining a pen input mode when the contact area detected by the contact area detection means is smaller than the value corresponding to the upper limit of the contact area of the pen tip, and for determining a finger input mode when the contact area is equal to or larger than the value corresponding to the upper limit of the contact area of the pen tip and smaller than the value corresponding to the upper limit of the contact area of the fingertip.

### (Supplementary note 24)

The input device according to any one of Supplementary notes 17 to 23, wherein when a plurality of the objects touches the touch panel, the input determination means determines whether the input through the touch of each of the objects on the touch panel is valid or not.

This application is based upon and claims the benefit of priority from Japanese patent application No. 2010-35251, filed on February 19, 2010, the disclosure of which is incorporated herein in its entirety by reference.

### Reference Signs List

- 1-3: MOBILE TERMINAL
- 10: CONTROL UNIT
- 20: LCD
- 30: TOUCH PANEL
- 40: GENERAL-PURPOSE APPLICATION UNIT
- 41: TOUCH PANEL SETTING APPLICATION UNIT
- 50: SURFACE
- 60: REGISTERED IMAGE STORAGE UNIT
- 91: PEN
- 92: THUMB
- 93: CONTACT PORTION OF PEN
- 94: CONTACT PORTION OF THUMB
- 101: DISPLAY UNIT
- 102: INPUT DETERMINATION UNIT
- 103: IMAGE COMPARISON UNIT
- 104: MODE DETERMINATION UNIT
- 301: CONTACT COORDINATE ACQUISITION UNIT
- 302: CONTACT AREA DETECTION UNIT
- 303: CONTACT IMAGE READING UNIT

## Claims

1. A mobile terminal comprising:
a touch panel that receives an input through a touch of an object;
contact area detection means for detecting a contact area of the object on the touch panel, when the object touches the touch panel; and
input determination means for determining whether the input through the touch of the object on the touch panel is valid or not,
wherein the input determination means determines that the input through the touch of the object is invalid when the contact area detected by the contact area detection means is equal to or larger than a value corresponding to an upper limit of a contact area of a fingertip touching the touch panel.

2. The mobile terminal according to Claim 1, wherein when the mobile terminal is gripped by a user with one hand, the touch panel has a size that allows a part of fingers of the hand gripping the mobile terminal to touch the touch panel.

3. The mobile terminal according to Claim 1 or 2, further comprising contact image reading means for reading image data of the object touching the touch panel,
wherein when the contact area detected by the contact area detection means is smaller than the value corresponding to the upper limit of the contact area of the fingertip, the input determination means determines whether the input through the touch of the object is valid or not based on the image data read by the contact image reading means.

4. The mobile terminal according to Claim 3, further comprising:
registered image storage means for storing preliminarily registered image data; and
image comparison means for comparing the preliminarily registered image data with the image data read by the contact image reading means,
wherein when the contact area detected by the contact area detection means is smaller than the value corresponding to the upper limit of the contact area of the fingertip, the input determination means determines whether the input through the touch of the object is valid or not based on a result of the comparison by the image comparison means.

5. The mobile terminal according to Claim 3 or 4, wherein when the contact area detected by the contact area detection means is equal to or larger than a value corresponding to an upper limit of a contact area of a pen tip touching the touch panel and smaller than the value corresponding to the upper limit of the contact area of the fingertip, the input determination means determines whether the input through the touch of the object is valid or not based on the image data read by the contact image reading means.

6. The mobile terminal according to any one of Claims 3 to 5, wherein the image data is image data of a fingertip of a user, and the contact image reading means reads the image data of the fingertip touching the touch panel.

7. The mobile terminal according to Claim 5 or 6, further comprising mode determination means for determining a pen input mode when the contact area detected by the contact area detection means is smaller than the value corresponding to the upper limit of the contact area of the pen tip, and for determining a finger input mode when the contact area is equal to or larger than the value corresponding to the upper limit of the contact area of the pen tip and smaller than the value corresponding to the upper limit of the contact area of the fingertip.

8. The mobile terminal according to any one of Claims 1 to 7, wherein when a plurality of the objects touches the touch panel, the input determination means determines whether the input through the touch of each of the objects on the touch panel is valid or not.

9. A mobile terminal control method comprising:
detecting a contact area of an object on a touch panel that receives an input through a touch of the object, when the object touches the touch panel; and
determining whether the input through the touch of the object on the touch panel is valid or not,
wherein the determination as to whether the input is valid or not comprises determining whether the input through the touch of the object is valid or not when the contact area detected is equal to or larger than a value corresponding to an upper limit of a contact area of a fingertip touching the touch panel during a finger input.

10. The mobile terminal control method according to Claim 9, further comprising reading image data of the object touching the touch panel,
wherein the determination as to whether the input is valid or not comprises determining whether the input through the touch of the object is valid or not based on the read image data, when the contact area detected is smaller than the value corresponding to the upper limit of the contact area of the fingertip.
